# FASCICULE DE BREVET EUROPEEN

(11) **EP 2 250 644 B1**
(45) Date de publication et mention de la délivrance du brevet: **22.06.2011**
(21) Numéro de dépôt: 09721032.2
(22) Date de dépôt: 27.02.2009
(51) Int. Cl.: G11B 7/013, G11B 7/007

(54) **STRUCTURE DE STOCKAGE OPTIQUE A HAUTE DENSITE**
STRUKTUR FÜR OPTISCHE SPEICHERUNG MIT HOHER DICHTE
STRUCTURE FOR HIGH DENSITY OPTICAL STORAGE

(30) Priorité: 07.03.2008 FR 0801270
(43) Date de publication de la demande: 17.11.2010
(73) Titulaire: Commissariat à l'Énergie Atomique et aux Énergies Alternatives, 75015 Paris (FR); MPO International, 53700 Averton (FR)
(72) Inventeur: PICHON, Joseph, IL 60640 Chicago (US)
(74) Mandataire: Guérin, Michel
(86) Numéro de dépôt international: PCT/EP2009/052355
(87) Numéro de publication internationale: WO 2009/112383

(56) Documents cités:
- US-A- 6 071 586
- US-A1- 2005 281 176

## Description

La présente invention concerne une structure de stockage optique à haute densité. Elle s'applique notamment à la réalisation de disques optiques de grande capacité de stockage, et plus particulièrement à la réalisation de disques optiques préenregistrés.

Pour des raisons de simplification de la description, le support de stockage décrit par la suite sera un disque optique.
Classiquement, un disque optique préenregistré comprend un substrat, souvent en polycarbonate, qui, pour stocker de l'information, est conformé par des marques physiques, lesquelles peuvent prendre la forme de plots ou de cuvettes de tailles variables. Les marques physiques sont regroupées le long de pistes virtuelles espacées chacune par un pas d'écartement. Le système de lecture d'un tel disque comprend un objectif qui focalise un faisceau laser dans le plan du disque, formant ainsi un spot laser au foyer dont la dimension est approximativement égale au quotient de la longueur d'onde λ du faisceau sur l'ouverture numérique NA de l'objectif. La dimension de ce point (λ / NA) impose une limite de résolution qui empêche théoriquement le système de lire des marques plus petites que λ / 4NA.
La volonté de s'affranchir de cette limite de résolution pour produire des supports optiques à densité d'enregistrement plus élevée a conduit à employer des techniques dites de Super-résolution.
Ces techniques se fondent sur les propriétés optiques non linéaires de certains matériaux. Par propriétés non-linéaires, on entend le fait que certaines propriétés optiques du matériau changent en fonction de l'intensité de la lumière qu'ils reçoivent. Le laser de lecture lui-même va modifier localement les propriétés optiques du matériau par des effets thermiques, optiques, thermo-optiques et/ou optoélectroniques sur des dimensions plus petites que la dimension du spot laser de lecture ; du fait du changement de propriété, une information présente dans ce très petit volume devient détectable alors qu'elle n'aurait pas été détectable sans ce changement.

Le phénomène qu'on exploite est fondé principalement sur deux propriétés du laser de lecture qu'on va utiliser :
- d'une part le laser est focalisé très fortement de manière à présenter une section extrêmement petite (de l'ordre de la longueur d'onde) mais dont la distribution de puissance est gaussienne, très forte en son centre, très atténuée à la périphérie,
- et d'autre part, on choisit une puissance de laser de lecture telle que la densité de puissance sur une petite partie de la section, au centre du faisceau, modifie significativement les propriétés optiques de la couche, alors que la densité de puissance en dehors de cette petite portion de section ne modifie pas significativement ces propriétés ; les propriétés optiques sont modifiées dans un sens tendant à permettre la lecture d'une information qui ne serait pas lisible sans cette modification. Par exemple, les changements de propriétés optiques peuvent se traduire par une augmentation de la transmission.
Dans le cas où un bit d'information est constitué à partir d'une marque physique formée sur le disque optique, cette marque structurant la couche non-linéaire qui la recouvre, la réponse de la couche à l'impact du faisceau laser peut être indifféremment une augmentation de transmission ou une augmentation de réflectivité ; cette augmentation se produit au centre du faisceau laser et non à la périphérie du fait de la non-linéarité. Tout se passe alors comme si on avait utilisé un faisceau focalisé sur un diamètre beaucoup plus étroit que ce que permet sa longueur d'onde.
Diverses propositions théoriques ont été formulées pour mettre en oeuvre ces principes, mais aucune n'a donné lieu à un développement industriel. Le brevet US 5 153 873 rappelle la théorie. Le brevet US 5 381 391 donne l'exemple d'un film ayant des propriétés de réflectivité non-linéaires. Le brevet US 5 569 517 propose divers matériaux à changement de phase cristalline.
Parmi les techniques qui offrent actuellement les plus grandes possibilités, il y a l'utilisation d'une couche d'oxyde de platine (PtOₓ) enserrée entre deux couches de composé de sulfure de zinc et d'oxyde de silicium, l'ensemble étant inséré entre deux couches de composé AglnSbTe ou GeSbTe et l'ensemble étant à nouveau inséré entre des couches de composé de sulfure de zinc et d'oxyde de silicium. Le matériau AglnSbTe ou GeSbTe présente des propriétés de changement de phase sous l'effet d'un éclairement laser intense. On trouvera des exemples dans Applied Physics letters vol. 83, N°9, Sept 2003 Jooho Kim et autres, "Super-Resolution by elliptical bubble formation with PtOx and AglnSbTe layers", ainsi que dans le Japanese Journal of Applied Physics vol. 43, N° 7B, 2004, Jooho Kim et autres "Signal Characteristics of Super-Resolution Near-Field Structure Disk in Blue Laser System", et dans la même revue, Duseop Yoon et autres, "Super-Resolution Read-Only Memory Disc Using Super-Resolution Near-Field Structure Technology".
Les structures décrites dans ces articles reposent principalement sur la constitution de bulles d'expansion de l'oxyde de platine, confinées entre les couches qui les enserrent. Ces bulles sont formées lors de l'écriture laser et elles peuvent être reconnues lors de la lecture, même avec un laser de lecture de longueur d'onde égale à plusieurs fois la dimension des bulles.
On a proposé aussi, dans une demande de brevet antérieure n° FR 07 00938 du déposant, d'utiliser comme structure de stockage en super-résolution une superposition comprenant une couche d'antimoniure d'indium ou de gallium insérée entre deux couches diélectriques d'un composé de sulfure de zinc et d'oxyde de silicium (ZnS-SiO₂).
On peut alors enregistrer des marques physiques très petites et très rapprochées. Par exemple, pour la lecture d'informations à partir d'un laser bleu, typiquement avec une longueur d'onde d'environ 400 nanomètres, on peut enregistrer et lire ensuite des marques ayant une dimension (largeur et longueur) de 100 nanomètres ou moins, c'est-à-dire quatre à cinq fois moins que la longueur d'onde de lecture. On peut ainsi multiplier la densité d'informations d'un facteur d'environ 3 par rapport à des supports répondant à la norme BD (« Blu-Ray Disc »)
Cette technique est donc très avantageuse. Mais, bien qu'elle permette de rapprocher beaucoup les marques dans le sens du défilement des marques sous le faisceau laser de lecture, on s'est aperçu qu'on ne pouvait pas pour autant rapprocher beaucoup les marques dans le sens transversal au défilement, c'est-à-dire rapprocher les pistes les unes des autres autant qu'on a rapproché les marques les unes des autres.
En effet, le principe même de la super-résolution consiste à utiliser un faisceau laser de lecture de dimension large par rapport aux marques, et la partie périphérique de ce faisceau laser viendrait naturellement illuminer les marques de pistes voisines. Cette illumination, même si elle n'est pas suffisante pour modifier les propriétés de la couche active des marques de la piste voisine, engendrerait malgré tout un signal réfléchi qui crée une certaine diaphotie (en anglais : "cross-talk") perturbant le signal engendré par les marques de la piste lue.
De plus, le resserrement des pistes induit des difficultés d'asservissement en suivi de piste qui rendent la lecture du disque difficile, voire impossible.
Un but de l'invention est d'augmenter la densité d'information à stocker sur un support optique sans nuire à la lecture des informations stockées. A cet effet, l'invention a pour objet une structure de stockage optique d'informations à haute résolution comprenant un substrat pourvu de marques physiques, lesdites marques physiques étant recouvertes d'au moins une couche active à propriétés optiques non linéaires réversibles permettant une lecture en super-résolution, les propriétés optiques de la couche active étant modifiables localement par l'action d'une petite portion centrale d'un faisceau laser de lecture, la structure étant caractérisée en ce que le substrat est formé de pistes adjacentes alternativement en sillon et en plateau, les marques physiques étant formées sous forme de cuvettes sur les pistes en plateau, et sous forme de proéminences sur les pistes en sillon. Avantageusement, le substrat est en polycarbonate.
L'association d'une structure en plateaux et sillons combinée avec l'utilisation d'une couche active apte à produire un effet de super-résolution permet notamment de réduire drastiquement l'augmentation de diaphotie inhérente au principe de lecture par un laser dont le faisceau est plus large que les marques physiques à lire.
Selon un mode de réalisation, dans le cas de la lecture par un laser bleu de longueur d'onde environ 400 nanomètres, le pas d'écartement entre les centres de deux pistes adjacentes est compris entre 240 nanomètres et 320 nanomètres, la structure selon l'invention permettant d'obtenir de bonnes performances de lecture notamment à 240 nanomètres.
Selon un mode de réalisation, la longueur de chacune des marques physiques est comprise entre le double d'une longueur élémentaire T et 9T. Les marques ont une largeur de préférence égale à 2T ou légèrement supérieure. La valeur de T est beaucoup plus petite (environ 25 nanomètres) que celle des disques enregistrés actuellement selon la norme BD (70 à 80 nanomètres).
L'invention est applicable à la réalisation de disques optiques de grande capacité de stockage.
On notera que la publication de brevet US2005/0281176 décrit une structure à sillons et plateaux avec des proéminences sur les sillons, cette structure ne fonctionnant pas en super-résolution.

D'autres caractéristiques apparaîtront à la lecture de la description détaillée donnée à titre d'exemple et non limitative qui suit faite en regard de dessins annexés qui représentent :
- la figure 1, une vue rapprochée en perspective d'un disque optique pourvu d'une structure de stockage selon l'invention,
- la figure 2, une vue rapprochée de dessus d'une portion de disque pourvu d'une structure de stockage selon l'invention,
- la figure 3, une vue rapprochée en coupe d'une structure de stockage selon l'invention.

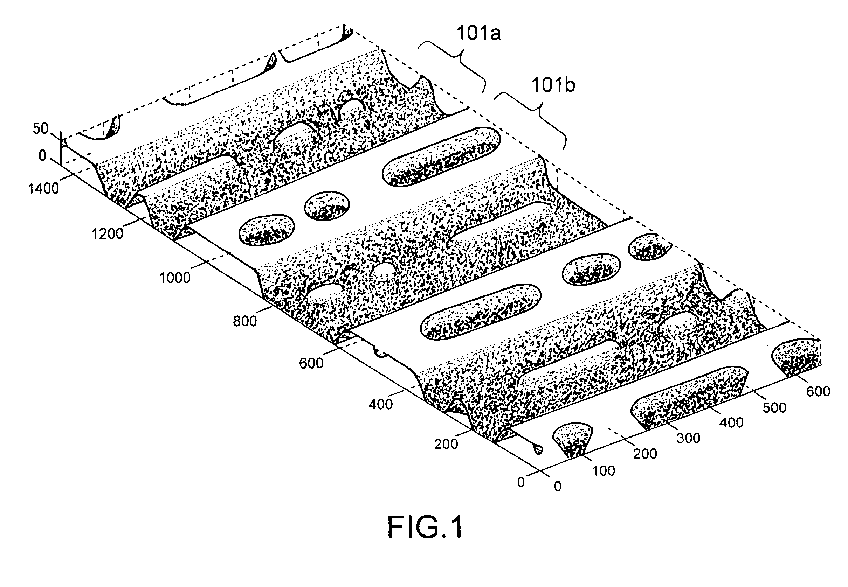

La figure 1 présente une vue rapprochée en perspective d'une section d'un disque optique pourvu d'une structure de stockage selon l'invention.
La structure du disque est formée par une juxtaposition de pistes sensiblement perpendiculaires à la radiale du disque, chacune de ces pistes étant alternativement haute et basse. Plus précisément, une première piste 101 a basse est formée par un sillon, une seconde piste 101 b, adjacente à la première piste 101 a, forme un plateau, dans l'exemple, d'une hauteur H égale à 50 nanomètres par rapport à la première piste 101 a. Le motif composé des deux pistes adjacentes 101 a, 101 b sillon-plateau est répété le long d'un rayon du disque, de sorte qu'une alternance entre piste en sillon 101 a et piste en plateau 101 b soit formée sur toute la largeur occupée par les pistes.

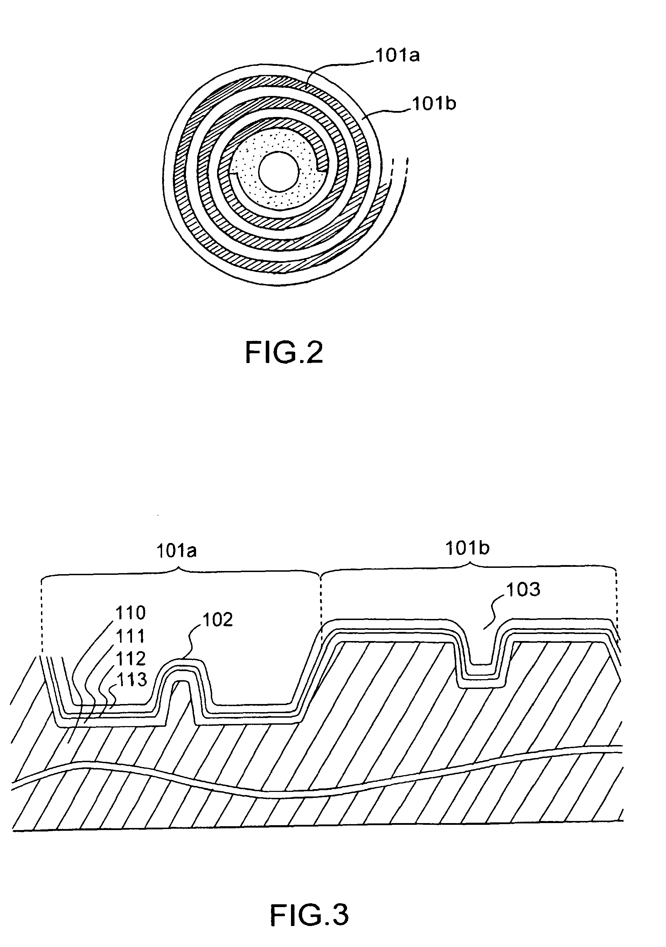

La figure 2 présente une vue rapprochée du dessus d'une portion de disque pourvu d'une structure de stockage selon l'invention. Dans l'exemple de la figure 2, le disque est formé de deux spirales adjacentes 101a, 101 b correspondant l'une à un sillon et l'autre à un plateau. Les deux spirales sont enroulées l'une dans l'autre de telle sorte qu'une juxtaposition radiale de deux sillons ou de deux plateaux soit impossible.
La figure 3 présente une vue rapprochée en coupe d'une structure de stockage selon l'invention. Le substrat 110, dont la surface comporte une alternance de sillons et plateaux gravés et un motif de marques gravées sur les sillons et sur les plateaux, est recouvert d'un empilement non linéaire optique, qualifié plus simplement par la suite « d'empilement actif », lequel, dans l'exemple, est formé de trois couches minces 111, 112, 113 de matériau. La première couche 111 et la troisième couche 113 ont des propriétés diélectriques, tandis que la deuxième couche 112 intercalée entre la première couche 111 et la troisième couche 113 est une couche active ; plus précisément, les caractéristiques de transmittivité ou réflectivité de cette deuxième couche 112 sont accrues de manière non linéaire sous l'effet d'une irradiation laser suffisamment puissante ; on choisira une puissance moyenne de faisceau laser de lecture telle que la densité de puissance au centre du faisceau seulement provoque ce changement.
Afin d'éviter l'introduction d'une dissymétrie dans la structure, la largeur à mi-hauteur des pistes en sillon a été choisie égale à la largeur à mi-hauteur des pistes en plateau. Par ailleurs, l'information est enregistrée sur le disque via des marques physiques qui sont réalisées différemment, selon qu'elles sont formées sur une piste en sillon ou une piste en plateau. Sur les pistes en sillon, les marques physiques révèlent des proéminences en forme de plots 102, tandis que sur les pistes en plateau, les marques physiques prennent l'aspect de cuvettes 103.
Dans l'exemple de la figure 3, la hauteur des plots 102 au-dessus des sillons et la profondeur des cuvettes 103 au-dessous des plateaux sont proches de la mi-hauteur des pistes en plateau 101 b. Dans un autre mode de réalisation, la hauteur des plots 102 présents sur les pistes en sillon 101 a est choisie égale à la hauteur des pistes en plateau 101b, et la profondeur des cuvettes 103 formées dans les pistes en plateau 101 b atteint le niveau des pistes en sillon 101 a.
La longueur de chaque marque physique 102, 103, dans le sens tangentiel, c'est-à-dire dans le sens de défilement des marques, est un multiple d'une longueur élémentaire T et varie, dans l'exemple, entre 2T et 9T. A titre d'illustration, T est égal à 25 nanomètres, à comparer avec une longueur T égale à 80 nanomètres pour le format classique BD 23.3 GB, de sorte que dans cette configuration, les plus petites marques physiques (de longueur 2T) mesurent 50 nanomètres (contre 160 nanomètres pour la norme BD) et les plus grandes marques (de longueur 9T) mesurent 425 nanomètres (contre 720 nanomètres pour la norme BD).
Par ailleurs, la largeur à mi-hauteur de chacune des marques physiques 102, 103, dans le sens radial perpendiculaire au sens de défilement, est inférieure à la largeur à mi-hauteur des pistes en sillon et en plateau 101 a, 101 b. Dans l'exemple, cette largeur à mi-hauteur des marques physiques est choisie égale à la longueur à mi-hauteur des marques 2T. Selon un autre mode de réalisation, les marques physiques de longueur 2T sont légèrement allongées dans le sens radial, la largeur à mi-hauteur de chacune des marques physiques étant légèrement supérieure à leur longueur, par exemple de 10 à 30% supérieure, le rapport signal sur bruit de ces petites marques étant alors amélioré.
Par ailleurs, la structure en plateaux et sillons permet d'assurer un signal en suivi de piste satisfaisant, ce signal étant souvent désigné par le terme anglo-saxon « Push Pull ». Un bon signal Push Pull peut notamment être obtenu avec un pas d'écartement compris entre 160 nanomètres et 320 nanomètres, le suivi de piste obtenu étant satisfaisant aussi bien lorsque le spot laser de la tête de lecture est calé sur une piste en plateau que lorsqu'il est calé sur une piste en sillon.
En outre, l'effet de super-résolution, qui produit une augmentation locale et réversible de la réflectivité de l'empilement des couches 111, 112, 113 sous le spot laser focalisé, n'a quasiment pas d'influence sur le signal Push Pull ; il ne perturbe donc pas l'asservissement en suivi de piste de la structure en plateaux et sillons.
D'une part, l'expérience montre que le signal en provenance de séquences de marques en cuvettes 103 sur les pistes en plateau 101 b est comparable à celui obtenu en provenance de plots 102 sur les pistes en sillon 101 a, et en particulier dans le cas des marques de dimension plus petites que la limite de résolution, ces dernières requérant un effet de super-résolution pour être détectées.
D'autre part, le phénomène de diaphotie, accentué par le resserrement des pistes, reste suffisamment faible lors de la lecture d'un disque structuré selon l'invention pour ne pas dégrader le rapport signal sur bruit de la piste en cours de lecture, et ce aussi bien à basse puissance de lecture, autrement dit sans effet de super-résolution, qu'à haute puissance de lecture, c'est-à-dire avec puissance de super-résolution.
Ainsi, une lecture des séquences de marques physiques formées sur une structure préenregistrée en sillons et plateaux, lesdites marques physiques étant compactées à la fois dans les directions radiale et tangentielle, peut être réalisée avec des performances similaires à celles obtenues lors de la lecture de disques classiques. Notamment, lorsque les pistes 101a, 101b sont séparées dans la direction radiale par un pas d'écartement compris entre 200 et 320 nanomètres, les performances de lecture de la structure selon l'invention s'avèrent satisfaisantes. En particulier, l'expérience montre que la lecture en super-résolution d'un disque structuré selon l'invention dont le pas d'écartement est de 240 nanomètres offre d'aussi bonnes performances, notamment du point de vue de la diaphotie et du rapport signal sur bruit, que celles obtenues lors de la lecture d'un disque en super-résolution sans structure en sillons et plateaux ayant un pas d'écartement de 320 nanomètres.

A titre d'illustration, des performances de lecture satisfaisantes sont notamment obtenues en utilisant :
o une tête de lecture optique produisant un laser bleu de longueur d'onde égale à 405 nm avec une ouverture optique égale à 0.85, ce qui correspond à une limite de résolution d'environ 120 nanomètres ;
o des pistes séparées par un pas d'écartement égal à 240 nanomètres, avec des plateaux d'une hauteur de 50 nanomètres, et des pentes de 60° environ pour les flancs de passage des sillons aux plateaux ;
o des marques physiques d'une hauteur de 50 nanomètres (hauteur des plots et profondeur des cuvettes), d'une longueur à mi-hauteur variant de 2T=50 nanomètres à 9T=425 nanomètres, d'une largeur à mi-hauteur égale à 50 nanomètres pour toutes les marques (du 2T à 9T) ;
o un empilement actif à l'origine de l'effet de super-résolution produisant une réflectivité à basse puissance égale à 22%, une réflectivité à haute puissance égale à 44 ;
Parmi les avantages de l'utilisation dans la structure selon l'invention d'un empilement actif de couches minces, dont les propriétés optiques évoluent de manière non linéaire et réversible sous faisceau laser haute puissance, on peut notamment citer :
o la détection rendue possible d'un signal issu de petites marques préenregistrées que ces marques soient formées sur un sillon ou sur un plateau,
o la réduction du phénomène de diaphotie, et donc l'amélioration du rapport signal sur bruit de la piste en cours de lecture,
o le maintien d'un signal Push Pull suffisant pour permettre un suivi de piste satisfaisant.

## Revendications

1. Structure de stockage optique d'informations à haute résolution comprenant un substrat (110) pourvu de marques physiques (102, 103), lesdites marques physiques étant recouvertes d'au moins une couche active (112) à propriétés optiques non linéaires réversibles permettant une lecture en super-résolution, les propriétés optiques de la couche active étant modifiables localement par l'action d'une petite portion centrale d'un faisceau laser de lecture, la structure étant **caractérisée en ce que** le substrat est formé de pistes adjacentes alternativement en sillon et en plateau, les marques physiques étant formées sous forme de cuvettes (103) sur les pistes en plateau (101 b), et sous forme de proéminences (102) sur les pistes en sillon (101 a).

2. Structure selon la revendication 1, **caractérisée en ce que** le pas d'écartement entre les centres de deux pistes adjacentes est compris entre 240 nanomètres et 320 nanomètres.

3. Structure selon l'une quelconque des revendications précédentes, la longueur de chacune des marques physiques (102, 103) étant comprise entre le double d'une longueur élémentaire T et 9T, **caractérisée en ce que** les marques de longueur 2T ont une largeur à mi-hauteur égale ou légèrement supérieure à leur longueur.

4. Structure selon l'une quelconque des revendications précédentes, **caractérisée en ce que** le substrat (110) est en polycarbonate.

5. Application de la structure selon l'une des revendications précédentes à la fabrication d'un disque optique de grande capacité de stockage.

## Claims

1. A high-resolution optical data storage structure comprising a substrate (110) provided with physical marks (102, 103), said physical marks being covered with at least one active layer (112) having reversible nonlinear optical properties enabling super-resolution readout, it being possible to modify the properties of the active layer locally by the action of a small central portion of a read laser beam, the structure being **characterized in that** the substrate is composed of adjacent tracks that are alternately groove and land tracks, the physical marks consisting of pits (103) in the land tracks (101 b) and bumps (102) in the groove tracks (101a).

2. The structure as claimed in claim 1, **characterized in that** the distance separating the centers of two adjacent tracks is between 240 nanometers and 320 nanometers.

3. The structure as claimed in either of the preceding claims, the length of each of the physical marks (102, 103) being between twice an elementary length T and 9T, **characterized in that** the marks of length 2T have a full width at half-maximum equal to or slightly greater than their length.

4. The structure as claimed in any one of the preceding claims, **characterized in that** the substrate (110) is made of a polycarbonate.

5. The application of the structure, as claimed in any one of the preceding claims, to the fabrication of a high storage capacity optical disk.

## Patentansprüche

1. Struktur für die optische Speicherung von Informationen mit hoher Auflösung, die ein Substrat (110) mit physischen Markierungen (102, 103) umfasst, wobei die physischen Markierungen von wenigstens einer aktiven Schicht (112) mit nichtlinearen umkehrbaren optischen Eigenschaften bedeckt sind, die ein Lesen mit Superauflösung zulassen, wobei die optischen Eigenschaften der aktiven Schicht örtlich durch die Wirkung eines kleinen mittleren Abschnitts eines Leselaserstrahls modifizierbar sind, wobei die Struktur **dadurch gekennzeichnet ist, dass** das Substrat aus benachbarten abwechselnden rillen-und rippenförmigen Spuren gebildet ist, wobei die physischen Markierungen in Form von Mulden (103) auf den rippenförmigen Spuren (101b) und in Form von Erhebungen (102) auf den rillenförmigen Spuren (101a) ausgebildet sind.

2. Struktur nach Anspruch 1, **dadurch gekennzeichnet, dass** der Abstand zwischen den Mitten von zwei benachbarten Spuren zwischen 240 Nanometern und 320 Nanometern liegt.

3. Struktur nach einem der vorherigen Ansprüche, wobei die Länge jeder der physischen Markierungen (102, 103) zwischen dem Doppelten einer Elementarlänge T und 9T liegt, **dadurch gekennzeichnet, dass** die Markierungen mit Länge 2T eine Breite in halber Höhe haben, die gleich oder geringfügig größer als ihre Länge ist.

4. Struktur nach einem der vorherigen Ansprüche, **dadurch gekennzeichnet, dass** das Substrat (110) aus Polycarbonat besteht.

5. Verwenden der Struktur nach einem der vorherigen Ansprüche bei der Herstellung einer optischen Speicherplatte mit hoher Speicherkapazität.
